# FASCICULE DE BREVET EUROPEEN

(11) **EP 1 751 861 B1**
(45) Date de publication et mention de la délivrance du brevet: **24.08.2016**
(21) Numéro de dépôt: 05762435.5
(22) Date de dépôt: 26.04.2005
(51) Int. Cl.: H03K 17/0814, H02M 3/335

(54) **CONVERTISSEUR DE PUISSANCE**
STROMWANDLER
POWER CONVERTER

(30) Priorité: 06.05.2004 FR 0404878
(43) Date de publication de la demande: 14.02.2007
(73) Titulaire: Faiveley Transport, 92230 Gennevilliers (FR)
(72) Inventeur: COYAUD, Martin, 37000 Tours (FR)
(74) Mandataire: Regimbeau
(86) Numéro de dépôt international: PCT/FR2005/001026
(87) Numéro de publication internationale: WO 2005/122399

(56) Documents cités:
- EP-A- 1 231 704
- AT-B- 386 497
- US-A- 5 379 206
- US-B1- 6 477 064
- US-B1- 6 501 194
- TARDIFF D ET AL: "A summary of resonant snubber circuits for transistors and GTOs" CONFERENCE RECORD OF THE IAS, SAN DIEGO OCT. 1-5 1989, vol. 24, 1 octobre 1989 (1989-10-01), pages 1176-1180, XP010091002 NEW YORK, US

## Description

Le domaine d'application de l'invention est celui de la conversion d'énergie électrique

L'invention est plus précisément relative aux convertisseurs électriques à découpage utilisant des moyens de commutation commandés.

Elle trouve notamment, mais non exclusivement, application dans le domaine de la conversion de puissance, par exemple pour les convertisseurs d'alimentation de réseaux de bord et/ou de climatisation dans les trains, ou encore pour les convertisseurs d'alimentation de motrices.

De façon plus générale, elle trouve application pour tous les convertisseurs de puissance (typiquement de 1 W à 100 MW ou plus).

Il a déjà été proposé dans la demande de brevet EP 1 231 704 de la demanderesse une structure de convertisseur qui comporte plusieurs transformateurs, comprenant chacun un enroulement primaire et un enroulement secondaire, associables en série et/ou en parallèle à l'aide de moyens de commutation.

Les enroulements primaires sont effectivement reliés entre eux, ainsi qu'aux bornes d'entrée de la structure, par l'intermédiaire de moyens de commutation qui sont aptes à être commandés pour permettre de connecter lesdits enroulements primaires selon différentes configurations dans lesquelles ils sont en série et/ou en parallèle.

Les enroulements secondaires sont également reliés entre eux, ainsi qu'aux bornes de sortie de la structure, par l'intermédiaire de moyens de commutation qui permettent aux aussi différentes configurations de montage en série et/ou en parallèle.

Une telle structure permet de fractionner le convertisseur en plusieurs convertisseurs en série pour des tensions d'entrée élevées, ou de disposer de plusieurs convertisseurs en parallèle pour des tensions d'entrée basses.

Il est ainsi possible de traiter des plages de tension d'entrée correspondant à des variations de circuit importantes, sans nécessiter pour les composants des différents circuits primaires et secondaires les mêmes dimensionnements que dans une structure de convertisseur classique.

Toutefois, un tel convertisseur n'est pas totalement satisfaisant.

En particulier, et parmi d'autres inconvénients, l'excursion possible de sa tension d'entrée est limitée.

Afin de s'affranchir de cette limitation, il a été proposé de surdimensionner la tension admissible par les moyens de commutation. Toutefois, cela entraîne notamment une diminution des performances et une augmentation du coût du convertisseur.

L'invention a notamment pour objectif de proposer une solution permettant d'étendre l'excursion de la tension d'entrée du convertisseur, qui n'entraîne pas les désavantages mentionnés ci-dessus.

A cet effet, l'invention propose un convertisseur de puissance comportant une pluralité de transformateurs, les enroulements primaires de ces transformateurs étant reliés entre eux par des moyens de commutation, leurs enroulements secondaires étant également reliés entre eux par des moyens de commutation, caractérisé en ce qu'il comporte, pour au moins un desdits moyens de commutation, un circuit électrique comprenant :
- un circuit de stockage d'énergie connecté en parallèle sur le moyen de commutation,
- un circuit de décharge du circuit de stockage d'énergie, relié à une première borne connectée au circuit de stockage d'énergie et à une seconde borne connectée à au moins un noeud du convertisseur présentant un potentiel dont la fluctuation, sous l'effet de la commutation des moyens de commutation du convertisseur, permet la décharge du circuit de stockage par le circuit de décharge.

Des aspects préférés, mais non limitatifs du convertisseur selon l'invention sont les suivants :
- le convertisseur comporte un circuit électrique du type exposé ci-dessus pour chacun des moyens de commutation.
- le circuit de stockage d'énergie comporte en série au moins un moyen de stockage d'énergie et au moins une valve,
- la première borne du circuit de décharge est connectée au noeud du circuit de stockage d'énergie constitué par la liaison entre le moyen de stockage et la valve,
- le circuit de décharge comporte au moins un moyen de décharge d'énergie ; il peut également comporter une valve en série avec ledit moyen de décharge d'énergie,
- les circuits de stockage et de décharge sont connectés de telle manière que le circuit de stockage d'énergie est déchargé à travers le circuit de décharge lors du cycle de fonctionnement du convertisseur.

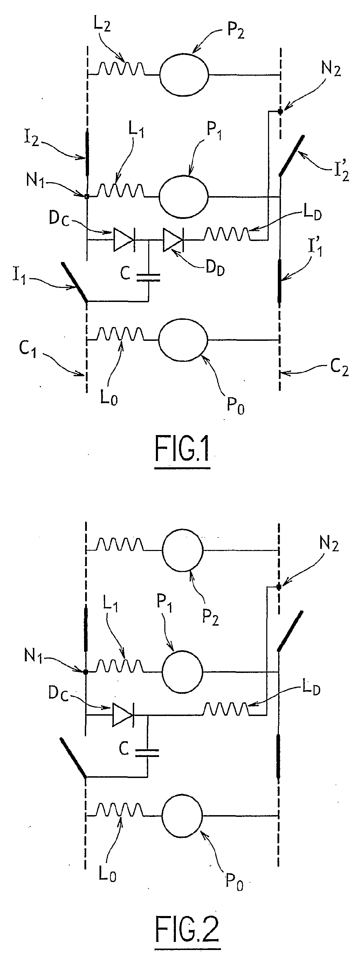

D'autres caractéristiques, buts et avantages de l'invention apparaîtront à la lecture de la description détaillée qui va suivre, et au regard des figures 1 à 4 annexées, données à titre d'exemples non limitatifs et sur lesquelles on a représenté différentes variantes de réalisation d'un convertisseur selon l'invention.

L'invention se rapporte à un convertisseur de puissance comportant une pluralité de transformateurs, les enroulements primaires de ces transformateurs étant reliés entre eux par des moyens de commutation, leurs enroulements secondaires étant également reliés entre eux par des moyens de commutation.

Le convertisseur peut être alimenté par une tension continue ou alternative.

Le convertisseur est en particulier destiné à être utilisé dans une installation ferroviaire, fixe ou mobile.

Le fonctionnement du convertisseur est basé sur le découpage des grandeurs électriques à l'aide des moyens de commutation. Les moyens de commutation utilisés peuvent être des interrupteurs unidirectionnels ou bidirectionnels, tels que des diodes, des thyristors, des thyristors GTO, des thyristors IGCT, des triacs, des transistors de type FET, bipolaires, IGBT, MOSFET, MBS ou similaires, ou des associations de ces interrupteurs.

Le convertisseur selon l'invention comporte plus particulièrement, pour au moins un des moyens de commutation, et de préférence pour chacun des moyens de commutation, un circuit électrique comprenant :
- un circuit de stockage d'énergie connecté en parallèle sur le moyen de commutation,
- un circuit de décharge du circuit de stockage d'énergie, relié à une première borne connectée au circuit de stockage d'énergie et à une seconde bornes connectée à au moins un noeud du convertisseur présentant un potentiel pouvant être inférieur à celui que présente le circuit de stockage, de manière à permettre la décharge du circuit de stockage par l'intermédiaire du circuit de décharge.

La figure 1 représente un mode de réalisation possible du circuit primaire d'un convertisseur selon l'invention.

On comprend que seule une partie du circuit primaire (constituée de trois enroulements primaires P₀, P₁, P₂) est illustrée sur la figure 1, sur laquelle les lignes pointillées représentent des conducteurs électriques reliant ladite partie du circuit primaire aux autres étages constituant le circuit primaire.

Le circuit primaire comporte ainsi deux conducteurs électriques C₁, C₂, dont les extrémités inférieures d'une part et les extrémités supérieures d'autre part sont connectées ensemble de manière à ce que les deux conducteurs électriques C₁, C₂ du circuit primaire soient connectés en parallèle entre les bornes d'entrée du convertisseur.

Chaque conducteur électrique C₁, C₂ comporte des moyens de commutation en série, I₁, I₂ et I'₁, I'₂ respectivement pour la partie du circuit primaire représentée sur la figure 1.

Les enroulements primaires P₀, P₁, P₂ sont reliés entre eux par les moyens de commutation I₁, I'₁, I₂, I'₂, les moyens de commutation I₁, I'₁ reliant les étages du circuit primaire constitués par les enroulements P₀ et P₁, les moyens de commutation I₂ I'₂ reliant les étages du circuit primaire constitués par les enroulements P₁ et P₂.

On a représenté les inductances de fuite respectives des enroulements primaires P₀, P₁ et P₂ sous les références L₀, L₁ et L₂.

Les moyens de commutation I₁, I'₁, I₂, I'₂ représentés sur cette figure sont des interrupteurs unidirectionnels, dénommés interrupteurs par la suite.

Sur cette figure 1, afin de permettre une meilleure lisibilité, un seul circuit électrique comprenant un circuit de stockage et un circuit de décharge est représenté, et cela pour l'interrupteur I₁.

On comprendra cependant qu'un tel circuit est de préférence destiné à être associé à chacun des moyens de commutation du convertisseur.

Le circuit de stockage, connecté en parallèle sur l'interrupteur I₁, comporte une valve en série avec un moyen de stockage d'énergie.

La valve représentée ici à titre d'exemple est plus précisément une diode D_{C}. Le moyen de stockage d'énergie ici représenté est une capacité C.

Le circuit de décharge permet de relier le noeud constitué par la liaison entre la diode D_{C} et la capacité C à au moins un noeud du convertisseur choisi de telle sorte qu'il présente un potentiel permettant la décharge du circuit de stockage par l'intermédiaire du circuit de décharge.

Le noeud N₂ ici choisi est celui constitué par la liaison entre l'enroulement P₂ et le conducteur électrique C₂.

On relie ainsi par le circuit électrique comprenant les circuits de stockage et de décharge le noeud N₁ constitué par la liaison entre l'enroulement P₁ et le conducteur C₁ au noeud N₂ constitué par la liaison entre l'enroulement P₂ de l'étage supérieur et l'autre conducteur C₂.

On exploite plus précisément, comme cela sera détaillé par la suite, la fluctuation du potentiel du noeud N₂ du convertisseur déterminée par la séquence des commutations des moyens de commutation du convertisseur.

Le circuit de décharge comporte un moyen de décharge qui peut être connecté en série avec une valve (ici la diode D_{D}).

Ledit moyen de décharge peut être un moyen apte à limiter l'intensité de décharge et à lisser l'énergie, tel que par exemple une inductance (comme cela est le cas de l'inductance L_{D} ici représentée).

La figure 2 illustre un autre mode de réalisation possible de l'invention selon lequel le circuit de décharge ne comporte pas de valve.

Les figures 3 et 4 illustrent quant à elles des variantes des figures 1 et 2 selon lesquelles le noeud N2 choisi ne l'est pas au niveau d'un étage supérieur mais au niveau d'un étage inférieur.

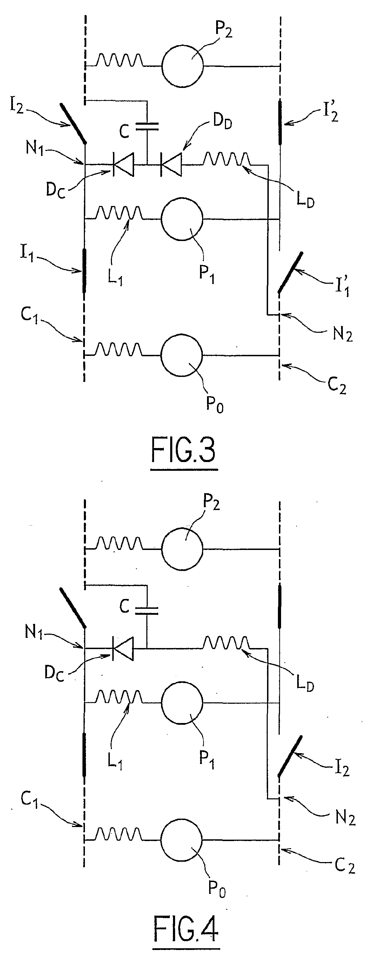

On relie ainsi, dans le cadre de ces figures 3 et 4, par le circuit électrique comprenant les circuits de stockage et de décharge, le noeud N₁ constitué par la liaison entre l'enroulement P₁ et le conducteur C₁ au noeud N₂ constitué par la liaison entre l'enroulement P₀ de l'étage inférieur et l'autre conducteur C₂.

On comprendra que ces différentes variantes sont particulièrement utiles lorsqu'il s'agit d' « équiper » les moyens de commutation des étages respectivement inférieur et supérieur d'une structure de convertisseur. En effet pour ces étages, on n'a pas d'étage plus bas, ou respectivement plus haut, sur lequel on peut venir chercher le potentiel fluctuant autorisant la décharge du circuit de stockage.

Les variantes selon les figures 3 et 4 selon lesquelles on relie « vers le bas » peuvent ainsi être utilisées pour l'étage supérieur d'une structure de convertisseur, là où les figures 1 et 2 selon lesquelles on relie « vers le haut » peuvent y être utilisées pour l'étage inférieur.

On notera par ailleurs que les variantes illustrées par les figures 2 et 4 selon lesquelles le circuit de décharge ne comporte pas de valve permettent d'opérer un meilleur déchargement du circuit de décharge.

On précise que les valves dont il a été fait précédemment état, tant au niveau du circuit de stockage que du circuit de décharge, peuvent être commandées ou non afin d'assurer leur blocage/déblocage.

On précise ici, à titre d'exemple, que pour une fréquence de découpage d'environ 20kHz et une tension primaire d'environ 400V, les valeurs des différents composants électriques du convertisseur sont typiquement les suivantes : l'inductance L₁ est d'environ 5 *µ*H, la capacité C d'environ100 nF, l'inductance L_{D} d'environ 1 mH, les diodes D_{C} et D_{D} étant choisies en fonction de la puissance du convertisseur.

On comprendra également que les exemples de réalisation illustrés sur les figures 1 à 4 se transposent aisément au circuit secondaire du convertisseur, ainsi qu'à la configuration duale de la structure de convertisseur jusqu'à présent discutée.

On décrit ci-après un cycle de fonctionnement (comprenant les étapes référencées 1 à 6 ci-après) du convertisseur selon le mode de réalisation possible de l'invention illustré sur la figure 1.

Ce cycle de fonctionnement est plus particulièrement établi par la loi de commande de la commutation des moyens de commutation

On considère que le moyen de stockage du circuit de stockage d'énergie est déchargé au départ du cycle. 1) A l'ouverture de l'interrupteur I₁, le courant traversant les différentes inductances de fuite (dont l'inductance L₁ associée à l'enroulement P₁) et celui provenant de l'entrée du convertisseur sont dérivés dans la capacité C à travers la diode D_{C}. Cela provoque la charge de la capacité C.

Le courant résiduel dans l'interrupteur I₁ est faible ce qui a pour effet de limiter les pertes à l'ouverture de l'interrupteur.

On parle alors de commutation OFF douce du moyen de commutation par opposition à la commutation dite dure que l'on observe classiquement en l'absence du circuit de décharge. 2) La capacité C se charge et absorbe l'énergie des différentes inductances de fuite (dont l'inductance L₁) des transformateurs sollicités par la commutation de l'interrupteur I₁, et cela jusqu'au blocage de la diode D_{C} en commutation douce grâce aux différentes inductances de fuite.

Cet effet limite les surtensions appliquées sur l'interrupteur I₁ et évite ainsi le surdimensionnement de la tenue en tension de l'interrupteur. 3) La capacité C reste chargée tant que le circuit de décharge constitué de l'inductance L₂ et de la diode D_{D} n'est pas activé.

La variation de la différence de potentiel entre les noeuds N₁ et N₂ est bien entendu déterminée par la loi de commande de la commutation des moyens de commutation. 4) L'interrupteur I₁ se ferme sans que le circuit électrique comprenant les circuits de stockage et de décharge ne soit sollicité.

La fermeture de l'interrupteur I₁ se fait au travers des différentes inductances de fuite (dont l'inductance L₁), ce qui limite les pertes à la fermeture de l'interrupteur.

On parle alors de commutation ON douce du moyen de commutation par opposition à la commutation dite dure que l'on observe classiquement en l'absence dudit circuit électrique. 5) Lorsque la tension au bornes du circuit de décharge constitué de l'inductance L₂ et de la diode D_{D} devient négative par abaissement du potentiel du noeud N₂, le condensateur C se décharge progressivement à travers le circuit de décharge.

La tension de la capacité C diminue progressivement grâce à l'inductance L_{D}. Le courant s'instaure progressivement, ce qui a pour effet d'opérer le déblocage de la diode D_{D} par commutation ON douce. 6) Le courant résiduel circulant dans le circuit de décharge constitué de l'inductance L_{D} et de la diode D_{D} est évacué au travers de la diode D_{C} dans les transformateurs et interrupteurs fermés présents entre les noeuds N₁ et N₂, et cela jusqu'à la décharge totale ou partielle de l'énergie contenue dans l'inductance L_{D}. Le courant diminue progressivement, ce qui a pour effet d'opérer le blocage de la diode D_{D} par commutation OFF douce.

Lors de l'étape 1) du cycle de fonctionnement, la capacité C peut stocker l'énergie des différentes inductances de fuite (dont l'inductance L₁) et celle provenant de l'entrée du convertisseur.

Ce stockage d'énergie a pour effet de permettre l'utilisation du circuit de stockage d'énergie comme une source de tension temporaire et variable (cette source dépendant du courant injectée dans le circuit de stockage d'énergie).

La tension moyenne applicable à l'entrée du convertisseur peut ainsi être augmentée, ce qui permet en particulier de limiter le nombre d'étage de moyens de commutation nécessaires dans le convertisseur pour tenir sa tension maximum de fonctionnement.

Le convertisseur selon l'invention dispose ainsi d'une excursion en tension d'entrée supérieure à celle d'un convertisseur classique.

En particulier, une telle amélioration de l'excursion de la tension d'entrée obtenue sans surdimensionnement des moyens de commutation.

A titre d'exemple, pour un convertisseur classique disposant d'une puissance de 50 kW, la tension maximale pouvant être atteinte est d'environ 2800 V. Pour un convertisseur selon l'invention disposant d'une même puissance, la tension maximale est nettement supérieure, typiquement supérieure à 8000 V.

Le convertisseur selon l'invention présente encore d'autres avantages par rapport aux convertisseurs classiques ne disposant pas, pour tout ou partie des moyens de commutation, d'un circuit électrique comprenant les circuits de. stockage et de décharge présentés ci-dessus. • Les convertisseurs classiques présentent en effet des pertes en commutation importantes, notamment du fait d'une utilisation des moyens de commutation en commutation dite dure, ce qui a pour effet de limiter la montée en fréquence et de dégrader le rendement de conversion.

L'utilisation selon l'invention des moyens de commutation en commutation douce permet de limiter voire d'annuler (notamment en commutation OFF) les pertes en commutation.

Le rendement de conversion du convertisseur se voit ainsi amélioré. La fréquence de découpage du convertisseur peut être augmentée, améliorant ainsi les possibilités d'intégration du convertisseur et l'efficacité de la régulation.
- Dans les convertisseurs classiques, les inductances de fuite des transformateurs génèrent des surtensions ce qui implique d'avoir recours à un dimensionnement particulier des moyens de commutation.

Dans le cadre de l'invention, l'impact des composants parasites (tels que les inductances de fuite des transformateurs) sur le dimensionnement des moyens de commutation est limité. • Les phases de démarrage et d'arrêt des convertisseurs classiques posent problème. Ils nécessitent en particulier un dispositif additionnel de précharge de son circuit secondaire pour pouvoir être démarré.

En effet, le contrôle du courant d'entrée d'un convertisseur classique est possible grâce à la tension présente sur les enroulements des transformateurs. L'absence de tension dans le circuit secondaire conduit à l'absence de tension sur les enroulements des transformateurs au primaire et donc à l'impossibilité de contrôler le courant de démarrage du convertisseur classique.

L'arrêt momentané ou permanent, pendant la phase de démarrage ou pendant le fonctionnement normal, n'est donc pas envisageable sans interrompre le circuit primaire. L'interruption du circuit primaire du convertisseur classique, en charge ou au démarrage, provoque l'apparition de tensions susceptibles de détruire les moyens de commutation.

Le convertisseur selon l'invention permet l'interruption du circuit primaire en déviant l'énergie du circuit primaire dans les moyens de stockage d'énergie. Il présente simultanément la propriété de faire apparaître une tension à ses bornes qui compense la tension du circuit d'entrée, et permet le contrôle du courant. La précharge du circuit secondaire d'un convertisseur selon l'invention peut être réalisée sans dispositif externe, simplement en commandant les moyens de commutation du convertisseur selon l'invention.
- Dans le cadre de l'invention, les fronts de tension dus aux moyens de commutation sont limités, ce qui a pour effet d'améliorer les performances du convertisseur en terme de compatibilité électromagnétique.

## Revendications

1. Convertisseur de puissance comportant une pluralité de transformateurs, les enroulements primaires (P₀,P₁,P₂) de ces transformateurs étant reliés entre eux par des moyens de commutation (I₁,I₂,I'₁,I'₂), leurs enroulements secondaires étant également reliés entre eux par des moyens de commutation,
**caractérisé en ce qu'**il comporte, pour au moins un desdits moyens de commutation, un circuit électrique comprenant :
- un circuit (D_{C}, C) de stockage d'énergie connecté en parallèle sur le moyen de commutation,
- un circuit de décharge du circuit de stockage d'énergie, relié à une première borne connectée au circuit de stockage d'énergie et à une seconde borne connectée à au moins un noeud (N₂) du convertisseur présentant un potentiel dont la fluctuation, sous l'effet de la commutation des moyens de commutation du convertisseur, permet la décharge du circuit de stockage par le circuit de décharge.

2. Convertisseur selon la revendication précédente, **caractérisé en ce qu'**il comporte ledit circuit électrique pour chacun des moyens de commutation.

3. Convertisseur selon l'une des revendications précédentes, **caractérisé en ce que** le circuit de stockage d'énergie comporte en série au moins un moyen de stockage d'énergie et au moins une valve

4. Convertisseur selon la revendication précédente, **caractérisé en ce que** la première borne du circuit de décharge est connectée au noeud du circuit de stockage d'énergie constitué par la liaison entre le moyen de stockage et la valve.

5. Convertisseur selon l'une des revendications précédentes, **caractérisé en ce que** le circuit de décharge comporte au moins un moyen de décharge d'énergie.

6. Convertisseur selon la revendication précédente, **caractérisé en ce que** le circuit de décharge comporte en outre au moins une valve en série avec ledit moyen de décharge d'énergie.

## Patentansprüche

1. Leistungswandler, der eine Mehrzahl von Transformatoren umfasst, wobei die Primärwicklungen (P₀, P₁, P₂) dieser Transformatoren miteinander durch Umschaltmittel (I₁, I₂, I'₁, I'₂) verbunden sind, wobei ihre Sekundärwicklungen ebenfalls miteinander durch Umschaltmittel verbunden sind,
**dadurch gekennzeichnet, dass** er für mindestens eines der Umschaltmittel eine elektrische Schaltung umfasst, die Folgendes umfasst:
- eine Schaltung (D_{C}, C) zum Energiespeichern, die auf dem Umschaltmittel parallel geschaltet ist,
- eine Entladeschaltung der Energiespeicherschaltung, die mit einer ersten Klemme verbunden ist, die an die Energiespeicherschaltung angeschlossen ist, und mit einer zweiten Klemme, die an mindestens einen Knoten (N₂) des Wandlers angeschlossen ist, der ein Potenzial aufweist, dessen Schwankung unter der Einwirkung der Umschaltung der Umschaltmittel des Wandlers das Entladen der Speicherschaltung durch die Entladeschaltung erlaubt.

2. Wandler nach dem vorhergehenden Anspruch,
**dadurch gekennzeichnet, dass** er die elektrische Schaltung für jedes der Umschaltmittel umfasst.

3. Wandler nach einem der vorhergehenden Ansprüche,
**dadurch gekennzeichnet, dass** die Energiespeicherschaltung in Serie mindestens ein Energiespeichermittel und mindestens ein Ventil umfasst.

4. Wandler nach dem vorhergehenden Anspruch,
**dadurch gekennzeichnet, dass** die erste Klemme der Entladeschaltung an den Knoten der Energiespeicherschaltung, der aus der Verbindung zwischen dem Speichermittel und dem Ventil gebildet ist, angeschlossen ist.

5. Wandler nach einem der vorhergehenden Ansprüche,
**dadurch gekennzeichnet, dass** die Entladeschaltung mindestens ein Energieentlademittel umfasst.

6. Wandler nach dem vorhergehenden Anspruch,
**dadurch gekennzeichnet, dass** die Entladeschaltung außerdem mindestens ein Ventil in Serie mit dem Energieentlademittel umfasst.

## Claims

1. Power converter comprising a plurality of transformers, wherein the primary windings (P₀, P₁, P₂) of said transformers are connected to each other by switching means (I₁, I₂, I'₁, I'₂) the secondary windings thereof being also connected to each other by switching means, **characterised in that** it comprises, for at least one of said switching means, an electric circuit comprising:
- an energy storage circuit (D_{C}, C) which is connected in parallel to the switching means,
- an energy storage circuit discharge circuit connected to a first terminal connected to the energy storage circuit and to a second terminal connected to at least one node (N₂) of the converter having a potential whose fluctuation, under the effect of the switching of the switching means of the converter, makes it possible to discharge the storage circuit by means of the discharge circuit.

2. Converter according to the previous claim, **characterised in that** it comprises said electric circuit for each of the switching means.

3. Converter according to one of the previous claims, **characterised in that** the energy storage circuit comprises at least one energy storage means and at least one valve connected in series.

4. Converter according to the previous claim, **characterised in that** the first terminal of the discharge circuit is connected to the node of the energy storage circuit formed by the link between the storage means and the valve.

5. Converter according to one of the previous claims, **characterised in that** the discharge circuit comprises at least one energy discharge means.

6. Converter according to the previous claim, **characterised in that** the discharge circuit further comprises at least one valve connected in series with said energy discharge means.
